# EUROPEAN PATENT APPLICATION

(11) **EP 3 011 875 A1**
(43) Date of publication of application: **27.04.2016**
(21) Application number: 13887369.0
(22) Date of filing: 22.09.2013
(51) Int. Cl.: A47J 19/02, A47J 19/06, A47J 43/046, B02C 7/08

(54) **JUICE EXTRACTOR**

(30) Priority: 21.06.2013 CN 201310250476
(71) Applicant: Elec-tech International Co., Ltd., Zhuhai, Guangdong 519000 (CN)
(72) Inventor: WANG, Donglei, Zhuhai Guangdong 519000 (CN); YUAN, Fuhai, Zhuhai Guangdong 519000 (CN); PANG, Hao, Zhuhai Guangdong 519000 (CN)
(74) Representative: Ferroni, Filippo
(86) International application number: PCT/CN2013/083879
(87) International publication number: WO 2014/201776

(57) **Abstract**

Disclosed is a juice extractor, comprising: a base (100); a drive mechanism (200) installed in the base (100); and a juice extracting component (300) supported by and fixed on the base (100); wherein, the juice extracting component (300) comprises: a shell (700) having an opening part (710) on its top, a juice outlet (715), and a residue outlet (720); a first grinding plate (500) rotatably installed in the shell (700), the first grinding plate (500) includes a first body part (510) and a connecting part to connect to the drive mechanism, and the first body part (510) has a first grinding face (511) with first grinding teeth (513) arranged thereon; a second grinding plate (400) fixed in the shell (700), the second grinding plate (400) includes a second body part (410) with a second grinding face (411) opposite to the first grinding face (511), and second grinding teeth (413) and a feed inlet (417) for feeding foods are disposed on the second grinding face (411); and a filter component (600) configured to separate vegetable/fruit juice from the extracted residues. The juice extractor has following advantages: lower cost, longer lifetime, higher juice extraction speed, and the filter holes (615) of the filter component (600) are not easily blocked. Fig.2

## Description

### TECHNICAL FIELD

The present disclosure relates to kitchenware, more particularly, to a juice extractor for extracting juice from vegetables, fruits or extracting soy milk from beans.

### BACKGROUND

In the prior arts, there are mainly two different manners for extracting juice with a juice extractor:
One manner is to extract juice through high speed cutting, centrifuging and spin drying. Wherein, vegetables and/or fruits to be extracted are smashed with a smashing device, and then are rotated at a high speed to spin off juice by centrifugal force. This manner has disadvantages as follows: significant noises and vibrations are generated during the high-speed revolution of the juice extractor, causing much noise in the operating environment; moreover, the inherent flavor and nutrition of foods are seriously damaged in the process of the high-speed revolution.

The other manner is to extract juice through screw extrusion. Wherein, vegetables and/or fruits to be extracted are extruded by a screw structure, so as to separate juice from the residues. This manner has solved the noise problem, and has avoided the loss of the inherent flavor and nutrition of foods, but following disadvantages still exist: Firstly, the foods are smashed and ground mainly by means of the twisting force generated between the screw and the inner wall of the shell, therefore, a large torque is required, and a motor with greater twisting force is needed, which increases the manufacturing cost of the juice extractor; moreover, too much twisting force concentrates on sides of the shell, as a result, the shell easily cracks after a long period of use, and the lifetime of the juice extractor is shortened. Secondly, to ensure a sufficient grinding, the head of the juice extractor cannot be short in length, thus the height of the shell is too high, as a result, the manufacturing cost of the juice extractor is increased, and the machine is not convenient for the user to operate. Finally, it is difficult to cut off fibers in foods in this manner, when handling high fiber foods, the filter screen is easily blocked and the juice extraction speed is not fast enough.

### SUMMARY

In view of defects existing in the prior art mentioned above, the objective of the present disclosure is to provide a juice extractor, which has lower manufacturing cost, longer lifetime and higher juice extraction speed, in addition, the filter holes of its filter component are not blocked easily.

In order to solve the technical problem above, the present disclosure provides a juice extractor, comprising:
a base;
a drive mechanism installed in the base;
a juice extracting component, which is supported by and fixed on the base;
wherein, the juice extracting component comprises:
   a shell having an opening part on its top, a juice outlet for discharging juice extracted from vegetables and/or fruits, and a residue outlet for discharging extracted residues;
   a first grinding plate rotatably installed in the shell, the first grinding plate includes a first body part, and a connecting part to connect to the drive mechanism, and the first body part has a first grinding face with first grinding teeth arranged on the first grinding face;
   a second grinding plate installed in the shell, the second grinding plate includes a second body part with a second grinding face opposite to the first grinding face, and second grinding teeth and a feed inlet for feeding foods are disposed on the second grinding face, the second grinding teeth match with the first grinding teeth to grind foods; and
   a filter component to separate vegetable and/or fruit juice from the extracted residues.

In one of the embodiments, at least one first grinding and discharge convex rib, which extends from a central section of said first grinding face to an outer peripheral surface of the first body part, is disposed on said first grinding face, and height of top surface of said first grinding and discharge convex rib is equal to or greater than maximum height of top surface of said first grinding teeth.

In one of the embodiments, said first grinding and discharge convex rib is arc-shaped, and a bending direction of said first grinding and discharge convex rib is consistent with a rotation direction of said first grinding plate in operation.

In one of the embodiments, two or more said first grinding and discharge convex ribs are disposed on said first grinding face, all of said first grinding and discharge convex ribs extend from the central section of the first grinding face and are spaced from one another along a circumferential direction, dividing the first grinding face into multiple grinding sections, with first grinding teeth distributed within each grinding section.

In one of the embodiments, along a rotation direction of said first grinding plate in operation, the maximum height of top surface of said first grinding teeth in each grinding section is increased gradually.

In one of the embodiments, all of the top surfaces of said first grinding teeth in each grinding section form a first gradual changing surface, height of said first gradual changing surface is decreased from the central section to an edge of said first grinding face, and level of an intersecting line of the first gradual changing surface and the outer peripheral surface of the first body part is gradually decreased along a rotation direction of said first grinding plate in operation.

In one of the embodiments, said first grinding teeth, which extend from said first grinding and discharge convex rib to the outer peripheral surface of first body part, are arc-shaped, and a bending direction of said first grinding teeth is consistent with a rotation direction of said first grinding plate in operation, a first drain groove for discharging juice is formed between every two adjacent first grinding teeth.

In one of the embodiments, at least one outward protruding first grinding rib is disposed on the outer peripheral surface of the first body part.

In one of the embodiments, at least one second grinding and discharge convex rib, which extends from a central section of said second grinding face to an outer peripheral surface of the second body part, is disposed on said second grinding face, and height of top surface of said second grinding and discharge convex rib is equal to or greater than maximum height of top surface of said second grinding teeth.

In one of the embodiments, said second grinding and discharge convex rib and said second grinding teeth are arc-shaped, and bending directions of said second grinding and discharge convex rib and said second grinding teeth are opposite to a rotation direction of said first grinding plate in operation.

In one of the embodiments, all of the top surfaces of said second grinding teeth form a second gradual changing surface, height of said second gradual changing surface is increased gradually from said feed inlet to an edge of said second grinding face.

In one of the embodiments, a positioning column is provided on a central section of said first grinding face, and a positioning hole engageable with said positioning column is provided on a central section of said second grinding face.

In one of embodiments, said second grinding plate is positioned above said first grinding plate.

In one of embodiments, said second grinding plate is removably installed in said opening part of said shell, said second grinding plate further includes a tubular-shaped food channel disposed on top surface of the second body part, said food channel communicates with said feed inlet.

In one of the embodiments, said juice extractor further comprising a lid, said lid is removably installed in the opening part of said shell, said second grinding plate is installed on said lid, and an elastic element is disposed between said second grinding plate and said lid, a tubular-shaped food channel is disposed on top surface of said lid, and said food channel communicates with said feed inlet.

In one of the embodiments, said filter component is positioned below the first body part, said filter component includes a hollow cylindrical filter cavity, multiple filter holes are disposed on a wall of said filter cavity.

In one of the embodiments, said filter component further includes an outward protruding second grinding rib disposed on an outer surface of said filter cavity, a third grinding rib is disposed on an inner surface of said shell, and said second grinding rib matches with said third grinding rib to grind foods.

In one of the embodiments, a stepped mounting part for installing said filter component is provided on a bottom of first body part, multiple first limitation grooves are disposed on surface of said mounting part, multiple first limitation protrusions engageable with said multiple first limitation grooves are disposed on an inner wall of a top of said filer cavity, said filter component is installed on said first grinding plate by rotating said first limitation protrusions into said limitation grooves.

In one of the embodiments, said filter component further includes one or more residue pushing blocks disposed on a bottom of said filter cavity, an annular-shaped residue discharge passage is disposed on the bottom of said shell, top surface of said residue discharge passage is inclined surface, said residue outlet is formed at an end of the top surface of the residue discharge passage, and a plurality of fourth grinding ribs are arranged on said residue discharge passage and spaced from one another, said fourth grinding ribs match with said residue pushing blocks to grind foods.

The juice extractor of the present disclosure extracts juice by means of the relative rotation between the first grinding plate and the second grinding plate, as compared with the prior art, the present disclosure has the following advantages:
1. The shell of the present juice extractor bears less twisting force, and the shell will not crack easily, thus the lifetime of the present juice extractor is prolonged.
2. The grinding plate of the present juice extractor needs less torque, therefore, a motor with less torque output can be used, the manufacturing cost of the juice extractor is reduced, and the electric power consumption can be reduced.
3. The foods can be smashed and ground by means of the first grinding plate and the second grinding plate of the present juice extractor, and the fibers of foods can be cut off easily, thus the problem that the filter holes of the filter component are easily blocked by high fiber foods can be solved, and the juice extraction speed is increased.
4. The height of the present juice extractor is significantly lowered, as a result, the size of the product is reduced, the manufacturing cost and the transportation cost are saved, and the machine is convenient for users to operate.

In summary, the present juice extractor has following advantages: lower cost, longer lifetime, higher juice extraction speed, and the filter holes of the filter component are not easily blocked.

### BRIEF DESCRIPTION OF THE DRAWINGS

Fig. 1 is a section view illustrating the structure of the juice extractor according to one embodiment of the present invention;
Fig. 2 is an exploded view of the juice extractor shown in Fig.1;
Fig. 3 is a schematic perspective view illustrating the structure of the first grinding plate of the juice extractor shown in Fig.1;
Fig. 4 is a schematic perspective view illustrating the structure of the second grinding plate of the juice extractor shown in Fig.1;
Fig. 5 is a schematic perspective view illustrating the structure of the filter component of the juice extractor shown in Fig.1;
Fig. 6 is a cross-section view illustrating the relationship between filter component and shell of said juice extractor in Fig.1;
Fig. 7 is a schematic view illustrating the structure of the second grinding plate of the juice extractor according to another embodiment of the present invention.

The elements in the figures are denoted as follows: 100, base; 105, top surface; 110, bearing area; 115, clip; 200, drive mechanism; 210, output shaft; 300, juice extracting component; 400, second grinding plate; 410, second body part; 411, second grinding face; 412, second grinding and discharge convex rib; 413, second grinding tooth; 414, second drain groove; 415, positioning hole; 416, outer peripheral surface of the second body part; 417, feed inlet; 418, rib; 419, second limitation groove; 420, food channel; 500, first grinding plate; 510, first body part; 511, first grinding face; 512, first grinding and discharge convex rib; 512a, top surface of the first grinding and discharge convex rib; 513, first grinding tooth; 513a, top surface of the first grinding tooth; 514 first drain groove; 515, positioning column; 516, outer peripheral surface of the first body part; 517, first grinding rib; 518, cylinder; 520, connecting part; 530, mounting part of the filter component; 535, first limitation groove; 600, filter component; 610, filter cavity; 615, filter hole; 620, first limitation protrusion; 630, second grinding rib; 640, residue pushing block; 650, juice pushing block; 660, residue stopping rib; 670, juice stopping rib; 700, shell; 710, opening part; 715, juice outlet; 720, residue outlet; 725, guide rib; 730, third grinding rib; 735, through-hole; 740, second limitation protrusion; 745, residue stopping groove; 755, residue discharge passage; 760, fourth grinding rib; 765, baffle wall; 770, waterproof cylindrical structure; 775, juice discharge passage; 800, elastic element; 900, lid; 905, rib; 910, third limitation groove; 915, food channel.

### DETAILED DESCRIPTION OF THE PREFERRED EMBODIMENTS

The present disclosure will be described in more details with reference to the accompanying figures and embodiments. It should be noted that various embodiments and the features thereof can be combined with each other under the condition of no conflict.

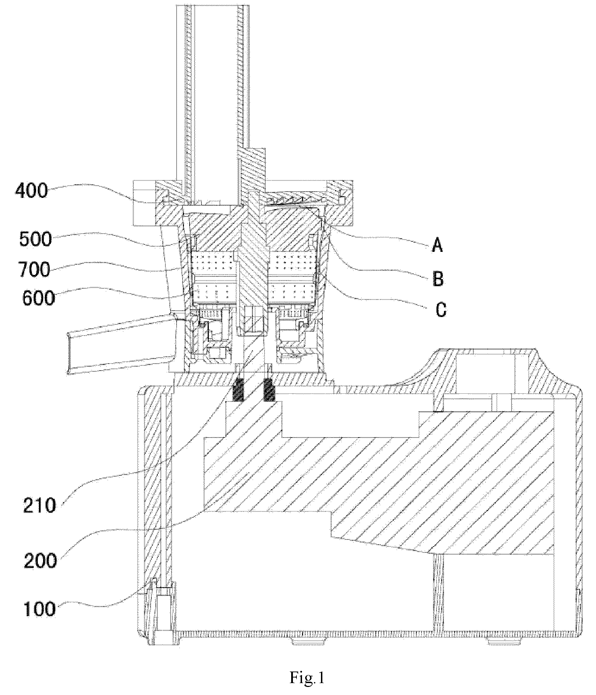

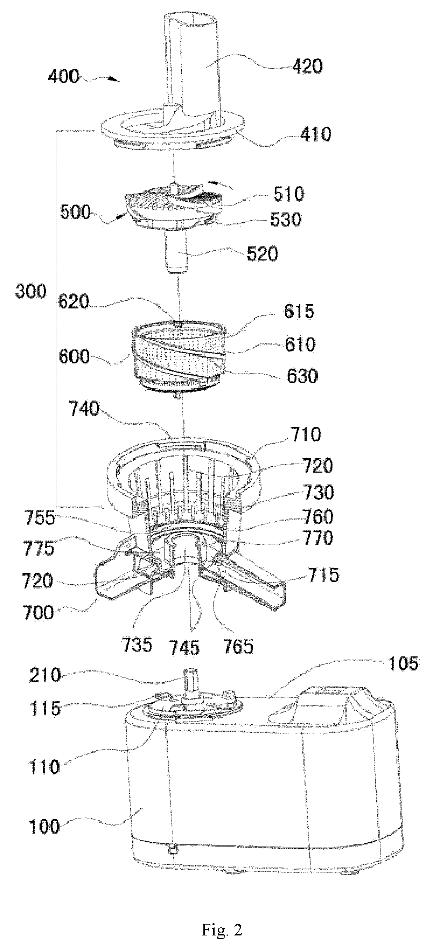

Fig. 1 and Fig. 2 illustrate the structure of the juice extractor according to one embodiment of the present invention, the juice extractor includes a base 100, a drive mechanism 200 and a juice extracting component 300, wherein, the base 100 has a top surface 105, the top surface 105 includes a bearing area 110 for installing the juice extracting component 300, and three clips 115 are arranged on the bearing area 110 along the circumferential direction. The drive mechanism 200 is installed inside the base 100, the output shaft 210 of the drive mechanism 200 protrudes out of a through-hole disposed in the central part of the bearing area 110.

With continuing reference to Fig. 1 and Fig. 2, the juice extracting component 300 mainly includes a shell 700, a first grinding plate 500 rotatably installed in the shell 700, a second grinding plate 400 which is opposite to the first grinding plate 500 and installed in the shell 700, and a filter component 600. Wherein, the shell 700 has an opening part 710 on its top; multiple second limitation protrusions 740 are disposed on the inner surface of the opening part 710, recesses (not shown) engageable with the clips 115 on the base 100 are arranged on the bottom of the shell 700, so that the shell 700 is detachably installed on the bearing area 110 by means of the recesses and the clips 115. Multiple guide ribs 725 and multiple third grinding ribs 730 are arranged alternately at intervals on the inner surface of the shell 700 along the axial direction of the shell 700, preferably, the multiple third grinding ribs 730 are not same in length.

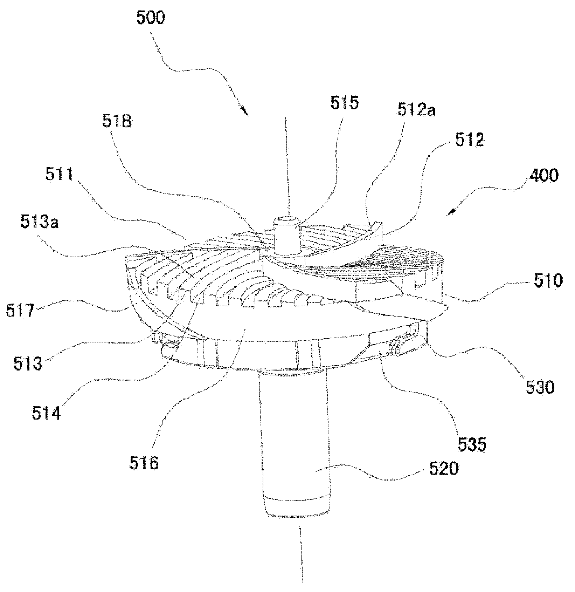

As shown in Fig. 3, the first grinding plate 500 includes a first body part 510 and a connecting part 520 for connecting to the output shaft 210 of the drive mechanism 200, a polygonal hole (not shown) engageable with the output shaft 210 is disposed on the connecting part 520, the connecting part 520 of the first grinding plate 500 is removably installed on the output shaft 210, so that it is convenient for washing. The first body part 510 includes a first grinding face 511, a cylinder 518 disposed in the central section of the first grinding face 511, at least one first grinding and discharge convex rib 512 that extends from the outer peripheral surface of the cylinder 518 to the outer peripheral surface of the first body part 510, and several first grinding teeth 513. A positioning column 515 extending outward along the axial direction of the cylinder 518 is disposed on the top surface of the cylinder 518, the positioning column 515 is engageable with the positioning hole 415 on the central section of the second grinding plate so as to perform the positioning function. The first grinding and discharge convex rib 512 is used for grinding and discharging, and the height of the top surface 512a of the first grinding and discharge convex rib 512 is equal to or greater than the maximum height of the top surface 513 a of the first grinding teeth 513. Preferably, the first grinding and discharge convex rib 512 is arc-shaped, and the bending direction of the first grinding and discharge convex rib 512 is consistent with the rotation direction (the direction denoted by the arrow next to the first grinding plate in Fig. 2) of the first grinding plate 500 in operation. The first grinding teeth 513 are mainly used for grinding. Preferably, two or more first grinding and discharge convex ribs 512 are disposed on the first grinding face, all of these first grinding and discharge convex ribs 512 extend from the central section of the first grinding face 511 and are spaced from one another along the circumferential direction, dividing the first grinding face 511 into multiple grinding sections, with first grinding teeth 513 distributed within each grinding section. Preferably, the maximum height of the top surface 513a of the first grinding teeth 513 in each grinding section is increased gradually along the rotation direction of said first grinding plate 500 in operation, thereby segmented grindings can be realized, which is beneficial to improve the juice extraction speed, and the blockage of the machine caused by larger size of foods can be avoided. Furthermore, all of the top surfaces 513a of the first grinding teeth 513 in each grinding section form a first gradual changing surface, the height of the first gradual changing surface is decreased from the central section to the edge of the first grinding face 511, and the level of the intersecting line of the first gradual changing surface and the outer peripheral surface 516 of the first body part 510 is gradually decreased along the rotation direction of the first grinding plate 500 in operation, the first gradual changing surface can be used for unloading the stuffs, so as to avoid the build-up of the extracted residues. Preferably, the first grinding teeth 513, which extend from the first grinding and discharge convex rib 512 to the outer peripheral surface 516 of the first body part 510, is arc-shaped, and the bending direction of the first grinding teeth 513 are consistent with the rotation direction of the first grinding plate 500 in operation; a first drain groove 514 for discharging juice is formed between every two adjacent first grinding teeth 513, which is convenient for draining ground juice. Wherein, the first grinding and discharge convex ribs 512 and the first grinding teeth 513 on the first grinding plate 500 match with the second grinding and discharge convex ribs 412 and the second grinding teeth 413 on the second grinding plate 400, forming a first grinding region A (as shown in Fig.1), the first grinding region A is mainly used for a primary food grinding and for cutting-off foods, so as to increase the juice yield, and to avoid blocking of the filter holes 615 of the filter component 600 caused by high fiber foods that have not been cut off.

With further reference to Fig. 3, at least one outward protruding first grinding rib 517 is disposed on the outer peripheral surface of the first body part 510, the first grinding rib 517 matches with the guide ribs 725 on the inner wall of the shell 700, forming a second grinding region B (see figure 1), the second grinding region B is used for a secondary food grinding, so as to increase the juice yield.

With further reference to Fig. 3, a stepped mounting part 530 for installing the filter component 600 is provided on the bottom of the first body part 510, multiple first limitation grooves 535 are disposed on the surface of the mounting part 530.

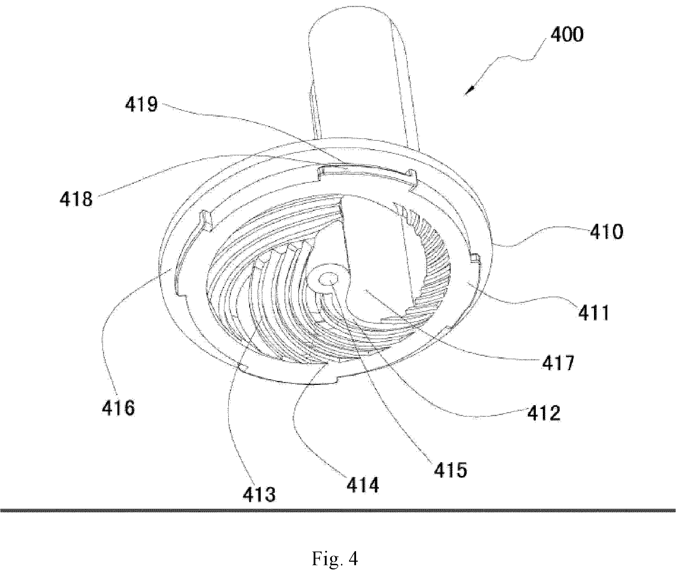

As shown in Fig. 4, the second grinding plate 400 includes a second body part 410 and a food channel 420 for feeding foods, the second body part 410 has a second grinding face 411; a positioning hole 415 is disposed in the central section of the second grinding face 411, in addition, a feed inlet 417 eccentrically positioned relative to the positioning hole 415, a second grinding and discharge convex rib 412 extending from the wall of the positioning hole 415 to the outer peripheral surface 416 of the second body part 410, and second grinding teeth 413 are disposed on the second grinding face 411. The positioning hole 415 is engaged with the positioning column 515 on the first grinding plate 500, the feed inlet 417 communicates with the food channel 420, for feeding foods. The second grinding and discharge convex rib 412 is used for grinding and discharging, and the height of the top surface of the second grinding and discharge convex rib 412 is equal to or greater than the maximum height of the top surface of the second grinding and discharge convex rib 412. Preferably, the second grinding teeth 413 are arc-shaped, and the bending direction of the second grinding teeth 413 are opposite to the rotation direction of the first grinding plate 500 in operation, thus, the first grinding teeth 513 and second grinding teeth 413 are arranged in an interleaved manner, so as to avoid blocking stuffs. Preferably, all of the top surfaces of the second grinding teeth 413 form a second gradual changing surface, the height of the second gradual changing surface is increased gradually from the feed inlet 417 to the edge of the second grinding face 411, as a result, the distance between the first grinding face 511 and second grinding face 411 is decreased gradually from the feed inlet 417, foods are crushed firstly, and then ground, so as to avoid the blockage of the machine caused by larger size of foods. Preferably, the second grinding teeth 413 extend from the second grinding and discharge convex rib 412 to the outer peripheral surface of the second body part 410, and a second drain groove 414 for discharging juice is formed between every two adjacent second grinding teeth.

With further reference to Fig. 4, a plurality of outward protruding ribs 418 are disposed on the outer peripheral surface 416 of the second body part 410, second limitation grooves 419 are formed by cutting off materials from the outward protruding ribs 418 toward the center point of the second body part, and multiple inward second limitation protrusions 740 engageable with the second limitation grooves 419 are formed on the inner surface of the opening part 710 of the shell 700, so that the second grinding plate 400 is removably installed in the opening part 710 of the shell 700 by means of the second limitation protrusions 740 and the second limitation grooves 419. It can be seen that, the second grinding plate 400 is not only used for grinding, but also used as a lid.

The first grinding plate 500 and the second grinding plate 400 are made of food-grade plastic materials or ceramic materials or powder metallurgy materials, or any combination thereof.

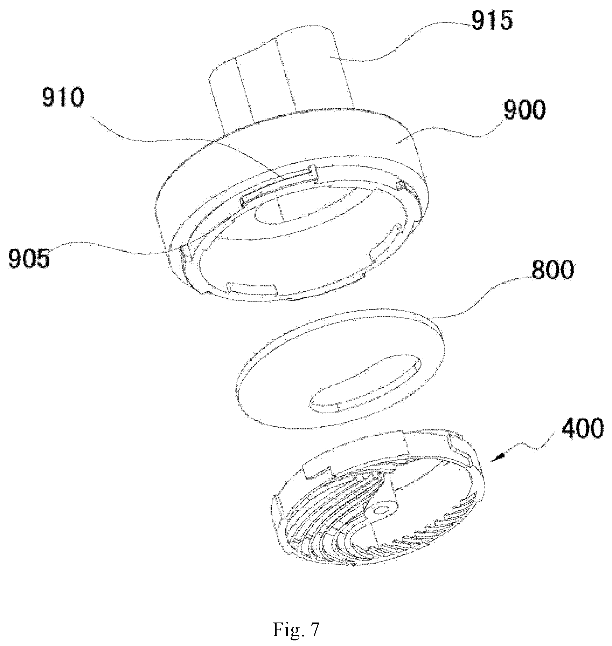

Fig. 7 is a schematic view illustrating the structure of the second grinding plate of the juice extractor according to another embodiment of the present invention, wherein, the second grinding plate 400 and the lid 900 are independent, the second grinding plate 400 also has a second grinding face and second grinding teeth, a plurality of outward protruding ribs 905 are formed on the outer peripheral surface of the lid 900, third limitation grooves 910 are formed by cutting off materials from the outward protruding ribs 905 toward the center point of the lid, the third limitation grooves 910 are engaged with the second limitation protrusions 740 on the inner surface of the opening part 710 of the shell 700, so that the lid is removably installed in the opening part 710 of the shell 700 by means of the second limitation protrusions 740 and the third limitation grooves 910. The second grinding plate 400 is installed in the lid 900, and an elastic element 800 is disposed between the second grinding plate 400 and the top of the lid 900. In this way, the distance between the second grinding plate 400 and first grinding plate 500 can be fine-turned according to the size of foods, so as to avoid the blockage of the machine caused by larger size of foods.

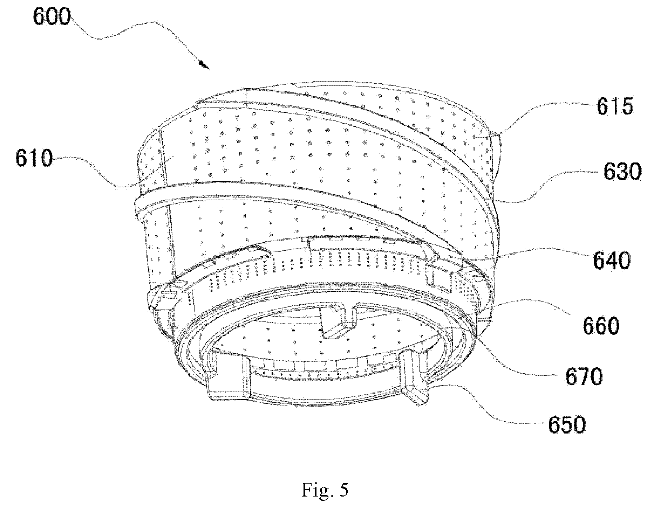

The filter component 600 as shown is used to separate the vegetable and/or fruit juice from the extracted residues. In this embodiment as shown in Fig. 5, the filter component 600 includes a hollow cylindrical filter cavity 610, multiple filter holes 615 are disposed on said filter cavity 610, preferably, the filter holes 615 are gradually reduced in diameter from the top to the bottom of the filter cavity 610. Preferably, one or more outward and spiral second grinding ribs 630 are disposed on the outer surface of the filter cavity 610, the second grinding ribs 630 match with the third grinding ribs 730 on the inner wall of the shell 700, forming a third grinding region C (see Fig.1), the third grinding region C is used for a tertiary food grinding, so as to increase juice yield.

With continuing reference to Fig. 5, the filter component 600 further includes a plurality of inward first limitation protrusions 620 disposed on the inner surface of the top of the filter cavity 610, the first limitation protrusions 620 are engageable with the first limitation grooves on the first grinding plate 500, so that the filter component 600 is removably installed on the first grinding plate 500 by means of the first limitation protrusions 620 and first limitation grooves, so that it is convenient for washing.

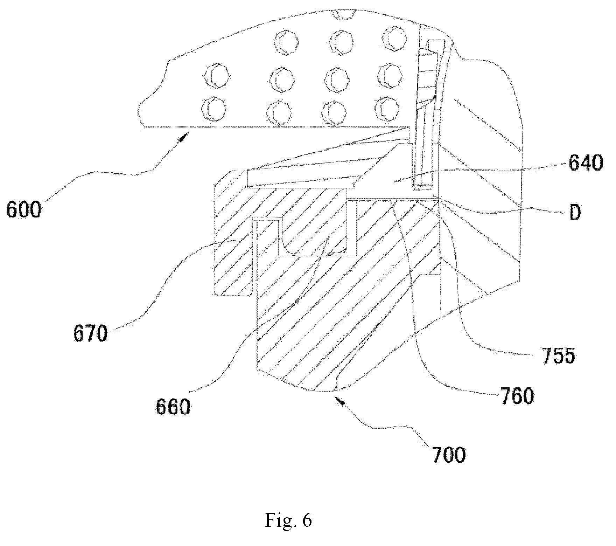

With continuing reference to Fig. 5, the filter component 600 further includes a plurality of residue pushing blocks 640 and residue stopping ribs 660 disposed on the bottom of the filter cavity 610, the residue stopping ribs 660 are annular-shaped and protrude downward. And juice stopping ribs 670 are disposed inside the residue stopping rib 660, the juice stopping ribs 670 are annular-shaped and protrude downward, and are capable of preventing the residues from mixing with the juice. And a plurality of juice pushing blocks 650 are formed from the inner wall of the juice stopping ribs 670 and protrude downward. With continuing reference to Fig. 2, a residue stopping groove 745 and a residue discharge passage 755 are disposed on the bottom of the shell 700, the residue discharge passage 755 is annular-shaped and located outside the residue stopping groove 745, the top surface of the residue discharge passage 755 is inclined surface, a residue outlet 720 for discharging residues from the shell 700 is formed at the end of the top surface of the residue discharge passage 755, and a plurality of fourth grinding ribs 760 are disposed on the top surface of the residue discharge passage 755 and are spaced from one another. A annular cylindrical baffle wall 765 is formed at the inner side of the residue stopping groove 745, and a waterproof cylindrical structure 770 is formed on the central lower end of the shell 700, the waterproof cylindrical structure 770 has a through-hole 735, and the output shaft 210 passes through the through-hole 735, a torus-shaped juice discharge passage 775 is disposed between the bottom of the waterproof cylindrical structure 770 and the bottom of the baffle wall 765, inclined discharge juice surface is formed on the surface of the juice discharge passage 775, a juice outlet 715 for discharging juice from the shell 700 is formed at the end of the inclined discharge juice surface. The fourth grinding ribs 760 on the residue discharge passage 755 of the shell 700 match with the end faces of the residue pushing blocks 640, forming a fourth grinding region D (see Fig. 6) for a quaternary food grinding, so as to increase the juice yield.

The working principle and operating method of the juice extractor of the present disclosure are as follows:
When the user needs to make juice, the user turns on the operation switch of the juice extractor at first, and then puts the prepared foods into the juice extractor through the food channel 420 on the second grinding plate 400. The first grinding plate 500 and filter component 600 are driven to rotate by the output shaft 210 of the drive mechanism 200, foods enter the region between first grinding plate 500 and second grinding plate 400 through the food channel 420 and are ground gradually; then the residues of foods enter the region between the first grinding ribs 517 and the guide ribs 725, and are smashed and ground again and again. And then the residues of foods enter the region between the second grinding ribs 630 and the third grinding ribs 730, and are smashed and ground again and again; at the same time, juice is separated from the residues by the filter component 600. Lastly, the residues enter the fourth grinding region D, and are smashed, ground and filtered once again, finally the residues are discharged from the residue outlet 720 by the residue pushing block 640 of the filter component 600, and juice is discharged from the juice outlet 715 into a pre-placed cup by the juice pushing block 650 of the filter component 600. Then the user can turn off the power and the juice is made.
Thus it can be seen, as compared to the prior art, the juice extractor of the embodiments of the present disclosure adopts a completely different way of extracting juice, and the present disclosure has following advantages:
   1. The shell of the present juice extractor bears less twisting force, and the shell will not crack easily, thus the lifetime of the present juice extractor is prolonged.
   2. The grinding plate of the present juice extractor needs less torque, therefore, a motor with less torque output can be used, the manufacturing cost of the juice extractor is reduced, and the electric power consumption can be reduced.
   3. The foods can be smashed and ground by means of the first grinding plate and the second grinding plate of the present juice extractor, and the fibers of foods can be cut off easily, thus the problem that the filter holes of the filter component are easily blocked by high fiber foods can be solved, and the juice extraction speed is increased.
   4. The height of the present juice extractor is significantly lowered, as a result, the size of the product is reduced, the manufacturing cost and the transportation cost are saved, and the machine is convenient for users to operate.
   5. The present juice extractor adopts four times of grinding, which significantly increases the juice yield.
   6. The components for extracting juice in the present juice extractor are detachable, and are convenient to assemble, disassemble and wash.

In summary, the present juice extractor has following advantages: lower cost, longer lifetime, higher juice extraction speed, higher juice yield and the filter holes of the filter component are not easily blocked.

What described above are several embodiments of the present invention, and these embodiments are specific and in details, but not intended to limit the scope of the present invention. It will be understood by those skilled in the prior art that various modifications and improvements can be made without departing from the spirit of the present invention. All of these modifications and improvements fall within the scope of the present invention.

## Claims

1. A juice extractor, comprising:
a base;
a drive mechanism installed in said base;
a juice extracting component, which is supported by and fixed on said base;
wherein, said juice extracting component comprises:
a shell having an opening part on its top, a juice outlet for discharging juice extracted from vegetables and/or fruits, and a residue outlet for discharging extracted residues;
a first grinding plate rotatably installed in said shell, said first grinding plate includes a first body part, and a connecting part to connect to said drive mechanism, and the first body part has a first grinding face with first grinding teeth arranged on said first grinding face;
a second grinding plate installed in said shell, said second grinding plate includes a second body part with a second grinding face opposite to said first grinding face, and second grinding teeth and a feed inlet for feeding foods are disposed on said second grinding face, said second grinding teeth match with said first grinding teeth to grind foods; and
a filter component to separate vegetable and/or fruit juice from the extracted residues.

2. The juice extractor according to claim 1, wherein, at least one first grinding and discharge convex rib, which extends from a central section of said first grinding face to an outer peripheral surface of the first body part, is disposed on said first grinding face, and height of top surface of said first grinding and discharge convex rib is equal to or greater than maximum height of top surface of said first grinding teeth.

3. The juice extractor according to claim 2, wherein, said first grinding and discharge convex rib is arc-shaped, and a bending direction of said first grinding and discharge convex rib is consistent with a rotation direction of said first grinding plate in operation.

4. The juice extractor according to claim 2, wherein, two or more said first grinding and discharge convex ribs are disposed on said first grinding face, all of said first grinding and discharge convex ribs extend from the central section of the first grinding face and are spaced from one another along a circumferential direction, dividing the first grinding face into multiple grinding sections, with first grinding teeth distributed within each grinding section.

5. The juice extractor according to claim 4, wherein, along a rotation direction of said first grinding plate in operation, the maximum height of top surface of said first grinding teeth in each grinding section is increased gradually.

6. The juice extractor according to claim 4, wherein, all of the top surfaces of said first grinding teeth in each grinding section form a first gradual changing surface, height of said first gradual changing surface is decreased from the central section to an edge of said first grinding face, and height of an intersecting line of the first gradual changing surface and the outer peripheral surface of the first body part is gradually decreased along a rotation direction of said first grinding plate in operation.

7. The juice extractor according to claim 2, wherein, said first grinding teeth, which extend from said first grinding and discharge convex rib to the outer peripheral surface of first body part, are arc-shaped, and a bending direction of said first grinding teeth is consistent with a rotation direction of said first grinding plate in operation, a first drain groove for discharging juice is formed between every two adjacent first grinding teeth.

8. The juice extractor according to claim 1, wherein, at least one outward protruding first grinding rib is disposed on the outer peripheral surface of the first body part.

9. The juice extractor according to claim 1, wherein, at least one second grinding and discharge convex rib, which extends from a central section of said second grinding face to an outer peripheral surface of the second body part, is disposed on said second grinding face, and height of top surface of said second grinding and discharge convex rib is equal to or greater than maximum height of top surface of said second grinding teeth.

10. The juice extractor according to claim 9, wherein, said second grinding and discharge convex rib and said second grinding teeth are arc-shaped, and bending directions of said second grinding and discharge convex rib and said second grinding teeth are opposite to a rotation direction of said first grinding plate in operation.

11. The juice extractor according to claim 9, wherein, all of the top surfaces of said second grinding teeth form a second gradual changing surface, height of said second gradual changing surface is increased gradually from said feed inlet to an edge of said second grinding face.

12. The juice extractor according to claim 1, wherein, a positioning column is provided on a central section of said first grinding face, and a positioning hole engageable with said positioning column is provided on a central section of said second grinding face.

13. The juice extractor according to any one of claims 1-12, wherein, said second grinding plate is positioned above said first grinding plate.

14. The juice extractor according to claim 13, wherein, said second grinding plate is removably installed in said opening part of said shell, said second grinding plate further includes a tubular-shaped food channel disposed on top surface of the second body part, said food channel communicates with said feed inlet.

15. The juice extractor according to claim 13, further comprising a lid, said lid is removably installed in the opening part of said shell, said second grinding plate is installed on said lid, and an elastic element is disposed between said second grinding plate and said lid, a tubular-shaped food channel is disposed on top surface of said lid, and said food channel communicates with said feed inlet.

16. The juice extractor according to claim 13, wherein, said filter component is positioned below the first body part, said filter component includes a hollow cylindrical filter cavity, multiple filter holes are disposed on a wall of said filter cavity.

17. The juice extractor according to claim 16, wherein, said filter component further includes an outward protruding second grinding rib disposed on an outer surface of said filter cavity, a third grinding rib is disposed on an inner surface of said shell, and said second grinding rib matches with said third grinding rib to grind foods.

18. The juice extractor according to claim 16, wherein, a stepped mounting part for installing said filter component is provided on a bottom of first body part, multiple first limitation grooves are disposed on surface of said mounting part, multiple first limitation protrusions engageable with said multiple first limitation grooves are disposed on an inner wall of a top of said filer cavity, said filter component is installed on said first grinding plate by rotating said first limitation protrusions into said limitation grooves.

19. The juice extractor according to claim 16, wherein, said filter component further includes one or more residue pushing blocks disposed on a bottom of said filter cavity, an annular-shaped residue discharge passage is disposed on the bottom of said shell, top surface of said residue discharge passage is inclined surface, said residue outlet is formed at an end of the top surface of the residue discharge passage, and a plurality of fourth grinding ribs are arranged on said residue discharge passage and spaced from one another, said fourth grinding ribs match with said residue pushing blocks to grind foods.
